# EUROPÄISCHE PATENTANMELDUNG

(11) **EP 0 952 078 A2**
(43) Veröffentlichungstag der Anmeldung: **27.10.1999**
(21) Anmeldenummer: 99108067.2
(22) Anmeldetag: 23.04.1999
(51) Int. Cl.: B62M 25/06

(54) **Vorrichtung zur Schaltbetätigung mechanischer Schaltgetriebe von Motorfahrzeugen**

(30) Priorität: 24.04.1998 DE 29807345 U
(71) Anmelder: Alpha Technik, Meier & Hofmann GmbH & Co. KG, 93342 Saal (DE)
(72) Erfinder: Meier, Josef, 93342 Saal (DE)
(74) Vertreter: Konnerth, Dieter Hans

(57) **Zusammenfassung**

Die Erfindung betrifft eine Vorrichtung zur Schaltbetätigung mechanischer Schaltgetriebe von Motorfahrzeugen, insbesondere von Motorrädern, mit einer Schaltbetätigungseinrichtung, die eine Schaltbewegung für die Getriebeschaltung ausführt, einer Antriebseinheit für die Schaltbetätigungseinrichtung, einer elektronischen Schaltregeleinheit zum Steuern der Schaltbetätigungseinrichtung, und einer Bedieneinheit zum bedarfsweisen Betätigen der Schaltregeleinheit durch einen Fahrer.

## Beschreibung

Die Erfindung betrifft eine Vorrichtung zur Schaltbetätigung mechanischer Schaltgetriebe von Motorfahrzeugen.

Die Schaltbetätigung eines mechanischen Schaltgetriebes erfolgt beispielsweise mit einem Schalthebel wie bei einem Pkw oder mit einer Schaltwippe wie bei einem Motorrad, die über Verbindungsteile wie Schaltgestänge oder Kabelzug mit dem Schaltgetriebe gekoppelt sind, so daß dieses in seine jeweiligen Schaltstellungen gebracht werden kann. Vor der Schaltbetätigung wird mittels einer Kupplung der Triebstrang zwischen einem Antriebsmotor und dem Schaltgetriebe getrennt.

Der vorliegenden Erfindung liegt die Aufgabe zugrunde, eine eingangs genannte Vorrichtung derart zu verbessern, daß die Schaltbetätigung vereinfacht wird.

Diese Aufgabe wird bei einer Vorrichtung zur Schaltbetätigung mechanischer Schaltgetriebe von Motorfahrzeugen erfindungsgemäß dadurch gelöst, daß sie gemäß den Merkmalen des Anspruchs 1 eine Schaltbetätigungseinrichtung, die eine Schaltbewegung für die Getriebeschaltung ausführt, eine Antriebseinheit für die Schaltbetätigungseinrichtung, eine elektronische Schaltregeleinheit zum Steuern der Schaltbetätigungseinrichtung, und eine Bedieneinheit zum bedarfsweisen Betätigen der Schaltregeleinheit durch einen Fahrer aufweist.

Eine derartige Vorrichtung gestattet über eine Bedienung der an griffgünstiger Stelle angebrachten Bedieneinheit, wie z. B. an einem Lenker eines Motorrades, ein exaktes Schalten der Gänge des Getriebes ohne Kraftaufwand. Eine derartige Schaltung kann als halbautomatische Schaltung bezeichnet werden, da das Vorwählen und das Auslösen eines Gangwechsels durch eine Betätigung oder Bedienung des Fahrers vorgenommen wird, während die eine Kraft erfordernde tatsächliche Auslösebewegung von einer angetriebenen Schaltbetätigungseinrichtung ausgeführt wird. Die Vorrichtung ist für jegliche Art von Motorfahrzeugen mit mechanischen Schaltgetrieben geeignet, wie beispielsweise Personen- oder Lastkraftwagen oder Motorräder. Eine besonders vorteilhafte Anwendung besteht bei Motorrädern und insbesondere bei Rennmotorrädern, bei denen bei Kurvenfahrt mit extremer Schräglage die Fußbetätigung eines üblichen Gangschalthebels problematisch ist, da der Fuß aufgrund der Behinderung durch die Rennpiste nur mit größten Schwierigkeiten mit der üblichen Seitwärtsbewegung unter den Gangschalthebel gebracht werden kann. Die erfindungsgemäße Vorrichtung ersetzt hier die Fußbetätigung.

Vorteilhafte Ausgestaltungen der Erfindung sind in den Unteransprüchen angegeben.

Zweckmäßigerweise enthält die Bedieneinheit Schalter und/oder Hebel zum Vorwählen eines gewünschten Gangwechsels durch den Fahrer, wie Druckschalter, Kippschalter und dergleichen, wobei mechanisch oder elektronisch arbeitende Schalter verwendet werden können.

Die Schaltbetätigungseinrichtung kann z. B. als ein Magnetschalter, ein Stellmotor oder ein Pneumatik- oder ein Hydraulikzylinder ausgebildet sein. Durch diese Einrichtungen wird eine ausreichende Schaltkraft erzeugt. Die Schaltbetätigungseinrichtung kann am Fahrzeugrahmen oder direkt an einem Getriebegehäuse angebracht sein und direkt oder über Umlenkungen in Abhängigkeit der Getriebebauart mit einer Schaltwelle des Getriebes oder einem sonst üblichen Schaltelement verbunden oder gekoppelt sein.

Wenn die Schaltbetätigungseinrichtung mit einem üblichen Schalthebel, insbesondere Fußschalthebel, gekoppelt ist, so kann es je nach Art der Schaltbetätigungseinrichtung zweckmäßig oder erforderlich sein, daß eine Freischalteinrichtung vorgesehen ist zum Freigeben der Kopplung zwischen der Schaltbetätigungseinrichtung und dem Schaltgetriebe, wenn der Schalthebel, insbesondere der Fußschalthebel, dennoch vom Fahrer betätigt werden sollte.

Die Antriebseinheit kann dementsprechend zum Bereitstellen der Antriebsenergie unterschiedliche Komponenten wie z. B. eine Hydraulikpumpe, einen Kompressor, einen Generator oder einen Akkumulator aufweisen.

In einer vorzugsweisen Ausgestaltung der Erfindung ist die elektronische Schaltregeleinheit in ein Motorsteuergerät integriert. Damit läßt sich ein Motormanagement bereitstellen, mit dem auf unterschiedliche Bedürfnisse bei unterschiedlichen Fahrzeugen und bei unterschiedlichen Fahrern eingegangen werden kann. So kann der Schaltzeitpunkt für einen Gangwechsel vorgegeben und von bestimmten fahrzeug- oder umgebungsspezifischen Parametern abhängig gemacht werden, die in dem Motorsteuergerät erfaßt und verarbeitet werden. Das Schalten erfolgt dann im Sinne einer vollautomatischen Schaltbetätigung ohne Zutun durch den Fahrer.

Jedoch kann auch vorgesehen sein, daß der Fahrer zusätzlich auf das Schaltverhalten Einfluß nehmen kann und auch bewußt einen Gangwechsel über die Bedieneinheit herbeiführen kann.

Daher ist es zweckmäßig, wenn in der elektronischen Schaltregeleinheit bzw. dem Motorsteuergerät zumindest ein Schaltprogramm abgespeichert ist, nach dem ein Schaltvorgang bzw. ein Gangwechsel erfolgt. Das Schaltprogramm kann aufgrund unterschiedlicher Parameter arbeiten. Zweckmäßig ist es, wenn das Schaltprogramm in Abhängigkeit von Motorparametern wie der Motordrehzahl schaltet. So können in dem Schaltprogramm beispielsweise eine oder mehrere Schaltdrehzahlen des Motors festgelegt werden, z. B. eine Drehzahl des maximalen Motordrehmoments, um eine optimale Beschleunigung beim Hochschalten zu erzielen.

Vorteilhaft ist es auch, wenn ein solches Schaltprogramm eine Veränderung der Geschwindigkeit des Schaltvorgangs enthält. Dies kann durch entsprechende Beeinflussung der jeweiligen Schaltbetätigungseinrichtung vorgenommen werden. So kann auch die Geschwindigkeit des Leistungseinsatzes gesteuert werden. Dies kann bei unterschiedlichen Fahrbahnbeschaffenheiten vorteilhaft sein.

Zweckmäßigerweise können verschiedene andere Fahrzeugkomponenten zum Bereitstellen von Parametern und Steuerwerten für die Schaltregeleinheit bzw. das Schaltprogramm verwendet werden. Damit kann die Schaltbetätigungseinrichtung zum Erzielen des gewünschten Schaltverhaltens beeinflußt werden. So kann die Stellung des Gasgriffs bzw. des Gaspedals und die Geschwindigkeit der Verstellung des Gasgriffs bzw. Gaspedals über einen Sensor erfaßt und an die Schaltregeleinheit übertragen werden. Vorteilhafterweise kann die Drehzahl des oder eines angetriebenen Hinterrades im Vergleich zum Vorderrad z. B. mit einem Wegdrehzahlsensor überwacht werden. Wird ein wesentlicher Drehzahlunterschied festgestellt, z. B. beim Durchdrehen des beschleunigten Hinterrades auf glatter Fahrbahn, so wird die Schaltbetätigung verändert und an die Reibungsverhältnisse zum Erzielen eines sicheren Fahrverhaltens angepaßt. Das Schaltverhalten der Schaltregeleinheit im Hinblick auf Schaltpunkte und Schaltgeschwindigkeit kann auch in Abhängigkeit vom Fahrkönnen des Fahrers und seiner Fahrzeugbeherrschung eingestellt werden.

Des weiteren kann das Schaltprogramm eine Verstellung und/oder eine Unterbrechung der Zündung und/oder der Kraftstoffeinspritzung des Motors während dem Schaltvorgang enthalten. Auch durch diese Maßnahme kann das Fahrverhalten verbessert werden, da eine Leistungsminderung und der Leistungseinsatz des Motors gesteuert werden kann.

Gemäß einer bevorzugten Ausführungsform der Erfindung wird die jeweilige Getriebeschaltstellung erfaßt und der elektronischen Schaltregeleinheit bzw. dem Motorsteuergerät zugeführt. Aufgrund in dem Schaltprogramm gespeicherter Informationen sind dann unzulässige Schaltbetätigungen blockiert. Hierdurch wird eine Sicherheitsfunktion bereitgestellt, da nur zulässige Schaltbetätigungen und Schaltvorgänge durchgeführt werden können. Der elektronischen Schaltregeleinheit bzw. dem Motorsteuergerät können auch im Sinne einer Optimierung des Schaltvorganges die aktuellen Positionen der Schaltbetätigungseinrichtung rückgemeldet werden.

Die erfindungsgemäße Vorrichtung kann bei einem Neufahrzeug konstruktiv eingeplant und integriert sein. In vorteilhafter Ausbildung der Erfindung können die Schaltbetätigungseinrichtung, die Antriebseinheit, die elektronische Schaltregeleinheit bzw. das Motorsteuergerät und die Bedieneinheit Nachrüstteile für ein Motorfahrzeug und insbesondere ein Motorrad sein.

Die Vorrichtung kann eine Kupplungsbetätigungseinrichtung aufweisen, die von der Schaltregeleinheit gesteuert wird. Damit ist eine vollautomatische Schaltbetätigung gegeben, die drehzahl- und lastabhängig ist und durch entsprechende Schaltprogramme steuerbar ist, und die insbesondere als Schalthilfe für Behinderte vorteilhaft einsetzbar ist. Hierbei ist es zweckmäßig, wenn in der Schaltregeleinheit ein Leerlaufsuchprogramm gespeichert ist, mit dessen Hilfe die Leerlaufstellung des Getriebes sicher schaltbar ist. Das Leerlaufsuchprogramm erkennt dabei über eine entsprechende Sensoreinrichtung den Stillstand des Fahrzeugs, so daß beim Betätigen eines Schaltknopfes ein entsprechender Schaltbefehl das Getriebe in die Leerlaufstellung bringt. Zusätzlich kann vorgesehen sein, daß durch einen weiteren Schaltbefehl aus der Leerlaufstellung heraus der erste Gang durch die Schaltbetätigungseinrichtung eingelegt wird.

Nachfolgend wird die Erfindung anhand von Ausführungsbeispielen unter Bezugnahme auf Zeichnungen näher erläutert. Es zeigt:
- Fig. 1: in einer seitlichen, ausschnittsweisen Ansicht einen Antriebsmotor eines Motorrades mit einer Schaltbetätigungseinrichtung der erfindungsgemäßen Vorrichtung;
- Fig. 2: in einer Draufsicht einen Lenker des Motorrades mit einer Bedieneinheit der erfindungsgemäßen Vorrichtung;
- Fig. 3: in einer Draufsicht eine Antriebseinheit einer Schaltbetätigungseinrichtung der erfindungsgemäßen Vorrichtung; und
- Fig. 4: in einer Draufsicht eine elektronische Schaltregeleinheit zum Steuern der Schaltbetätigungseinrichtung.

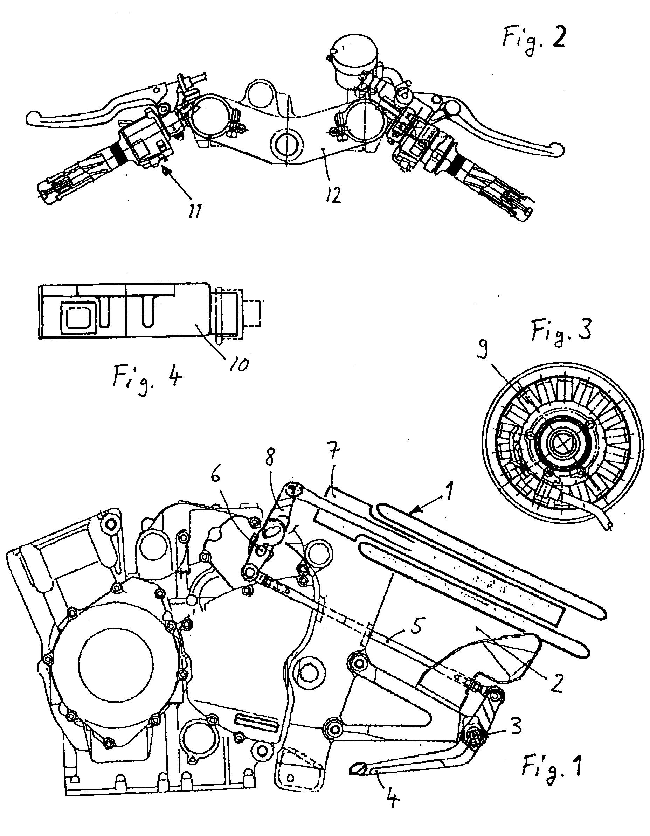

Ein Ausführungsbeispiel der erfindungsgemäßen Vorrichtung für ein Motorrad enthält einen Pneumatikzylinder 1 (nur schematisch dargestellt, siehe Fig. 1) als Schaltbetätigungseinrichtung, der an einem Getriebegehäuse 2 des Motors oder an einem Rahmen des Motorrades angebracht ist. Der Motor weist z. B. ein 6-Gang-Getriebe mit einer Klauenschaltung auf, die mittels Fußbetätigung über einen um eine Schwenkachse 3 schwenkbar gelagerten Fußhebel 4 (Schaltwippe), ein Schaltgestänge 5 und eine Schaltwalze oder Schaltwelle 6 betätigt wird, wobei in bekannter Weise durch Aufwärts- und/oder durch Abwärtsbewegung des Fußhebels 4 (Herauf- und Herunterschalten) die einzelnen Gänge des Getriebes der Reihe nach geschaltet werden können.

Ein längsbeweglicher Kolben 7 des Pneumatikzylinders 1 ist gelenkig mit einem Schwenkhebel 8 gekoppelt, der mit dem Schaltgestänge 5 derart verbunden ist oder direkt auf der Schaltwelle 6 angebracht ist, daß er die ansonsten durch Fußbetätigung eingeleitete Schaltbewegung ausführt. Eine am Motor angebrachte Antriebseinheit 9, im vorliegenden Fall ein Druckluftkompressor 9 (siehe Fig. 3, hier ist als Antriebseinheit beispielhaft ein Generator für einen Stellmotor als Schaltbetätigungseinrichtung dargestellt) ist über Druckleitungen und Steuerventile (nicht dargestellt) mit dem Pneumatikzylinder 1 verbunden und stellt die erforderliche Antriebsenergie für die axiale Schaltbewegung des Kolbens 7 in den beiden entgegengesetzten Richtungen bereit. Im nichtbetätigten Zustand ist der Pneumatikzylinder freigeschaltet, so daß die normale Betätigung des Fußschalthebels 4 nicht behindert ist.

Eine elektronische Schaltregeleinheit 10 (siehe Fig. 4) zum Steuern des Kompressors 9 und/oder des Pneumatikzylinders 1 ist an dem Motorrad angebracht. Sie empfängt ein Schaltsignal von einer Bedieneinheit 11, die an einem Lenker 12 des Motorrades (siehe Fig. 2) angebracht ist.

Die Bedieneinheit 11 ist bespielsweise ein Kipp- oder Wechselschalter zum Herauf- und Herunterschalten der Gänge, der vom Fahrer in der gewünschten Weise betätigt wird. Das dabei erzeugte Schaltsignal wird der elektronischen Schaltregeleinheit 10 zugeführt, die wiederum Schalt- und Steuersignale an den Kompressor 9 und an die Ventile für den Pneumatikzylinder 1 sendet, so daß dieser die gewünschten Schaltbetätigungen und Schaltbewegungen der Schaltwelle 6 ausführen kann, die den jeweiligen Gangwechsel im Schaltgetriebe bewirken.

Dabei kann zum Verbessern des Schaltverhaltens beim Hochschalten von der elektronischen Schaltregeleinheit 10 kurzzeitig die Zündung bzw. der Zündstrom unterbrochen werden oder die Zündung verstellt werden, so daß das Schalten der Gänge lastfrei, d. h. ohne Antriebskraft des Motors, erfolgen kann und dabei die übliche Kupplung nicht betätigt werden muß. Beim Herunterschalten kann es zweckmäßig sein, für ein verbessertes Schaltverhalten die Kupplung manuell zu betätigen.

Somit besteht bei diesem Ausführungsbeispiel der erfindungsgemäßen Vorrichtung eine halbautomatische Betätigung des mechanischen Schaltgetriebes.

Bei einem weiteren Ausführungsbeispiel der erfindungsgemäßen Vorrichtung ist die elektronische Schaltregeleinheit 10 in einem Motorsteuergerät integriert, das einen Speicher für Schalt- oder Steuerprogramme enthält. In einem solchen Schalt- oder Steuerprogramm ist beispielsweise abgespeichert, daß bei einer bestimmten Motordrehzahl ein Schaltvorgang selbsttätig ausgelöst wird und damit eine vollautomatische Betätigung des mechanischen Schaltgetriebes erfolgt. Diese Drehzahl kann diejenige sein, bei der der Motor sein maximales Drehmoment aufweist, oder sie kann nach anderen Kriterien festgelegt sein. So kann ein Programm die reduzierte Haftung der Reifen am Untergrund z. B. bei Regen berücksichtigen und einen Schaltmodus abgespeichert enthalten, wonach die Motorleistung durch entsprechende Motorsteuerung nach dem Schaltvorgang nicht abrupt und schlagartig, sondern weich einsetzt. Ebenso kann die Schaltgeschwindigkeit variiert und in diesem Fall reduziert werden, um eine deutliche Lastwechselreaktion zu vermeiden. Die Schaltgeschwindigkeit wird z. B. durch Beeinflussung der Druckluftzuführung zu dem Pneumatikzylinder erreicht.

Diese Schaltprogramme können vom Fahrer mit der Bedieneinheit 11 bedarfsweise vorgewählt werden. Zusätzlich kann der Fahrer mit der Bedieneinheit 11 die Schaltbetätigung vorgeben, so daß ein Gangwechsel bewußt und unabhängig vom Schaltprogramm erfolgen kann.

Die Vorrichtung kann durch eine zusätzliche Kupplungsbetätigungseinrichtung optimiert werden, die durch die Antriebskraft einer vorhandenen, oben genannten Antriebseinrichtung oder durch eine weitere Antriebseinrichtung betreibbar ist und von der Schaltregeleinheit 10 gesteuert wird. Damit ergibt sich ein vollautomatischer Schaltbetätigungsbetrieb mit zusätzlicher Kupplungsfunktion.

## Patentansprüche

1. Vorrichtung zur Schaltbetätigung mechanischer Schaltgetriebe von Motorfahrzeugen, insbesondere Motorrädern,
**gekennzeichnet durch**
eine Schaltbetätigungseinrichtung (1), die eine Schaltbewegung für die Getriebeschaltung ausführt,
eine Antriebseinheit (9) für die Schaltbetätigungseinrichtung (1),
eine elektronische Schaltregeleinheit (10) zum Steuern der Schaltbetätigungseinrichtung (1), und
eine Bedieneinheit (11) zum bedarfsweisen Betätigen der Schaltregeleinheit (10) durch einen Fahrer.

2. Vorrichtung nach Anspruch 1, dadurch gekennzeichnet, daß die Bedieneinheit (11) Schalter und/oder Hebel zum Vorwählen eines gewünschten Gangwechsels durch den Fahrer aufweist.

3. Vorrichtung nach Anspruch 1 oder 2, dadurch gekennzeichnet, daß die Schaltbetätigungseinrichtung (1) einen Magnetschalter, einen Stellmotor oder einen Pneumatik- oder einen Hydraulikzylinder aufweist.

4. Vorrichtung nach einem der Ansprüche 1 bis 3, dadurch gekennzeichnet, daß die Schaltbetätigungseinrichtung (1) an einem Getriebegehäuse (2) angebracht ist und ihre Schaltbewegung auf eine Schaltwelle (6) des Schaltgetriebes überträgt.

5. Vorrichtung nach einem der Ansprüche 1 bis 4, dadurch gekennzeichnet, daß die Schaltbetätigungseinrichtung (1) mit einem üblichen Schalthebel, insbesondere Fußschalthebel, gekoppelt ist und daß sie eine Freischalteinrichtung zum Freigeben der Kopplung zwischen der Schaltbetätigungseinrichtung (1) und dem Schaltgetriebe bei Betätigung des Schalthebels, insbesondere Fußschalthebels, aufweist.

6. Vorrichtung nach einem der Ansprüche 1 bis 5, dadurch gekennzeichnet, daß die Antriebseinheit (9) zum Bereitstellen der Antriebsenergie einen Generator, einen Akkumulator, einen Kompressor oder eine Hydraulikpumpe aufweist.

7. Vorrichtung nach einem der Ansprüche 1 bis 6, dadurch gekennzeichnet, daß die elektronische Schaltregeleinheit (10) ein Motorsteuergerät mit integrierter Schaltregeleinheit ist.

8. Vorrichtung nach einem der Ansprüche 1 bis 7, dadurch gekennzeichnet, daß in der elektronischen Schaltregeleinheit (10) bzw. dem Motorsteuergerät zumindest ein Schaltprogramm abgespeichert ist.

9. Vorrichtung nach Anspruch 8, dadurch gekennzeichnet, daß das Schaltprogramm fahrzeug- und/oder motorspezifische Steuerkenngrößen aufweist.

10. Vorrichtung nach Anspruch 8 oder 9, dadurch gekennzeichnet, daß das Schaltprogramm in Abhängigkeit von Motorparametern wie der Motordrehzahl schaltet.

11. Vorrichtung nach einem der Ansprüche 8 bis 10, dadurch gekennzeichnet, daß das Schaltprogramm eine Veränderung der Geschwindigkeit des Schaltvorgangs enthält.

12. Vorrichtung nach einem der Ansprüche 8 bis 11, dadurch gekennzeichnet, daß das Schaltprogramm eine Verstellung und/oder eine Unterbrechung der Zündung und/oder der Kraftstoffeinspritzung des Motors während dem Schaltvorgang enthält.

13. Vorrichtung nach einem der Ansprüche 8 bis 12, dadurch gekennzeichnet, daß die jeweilige Getriebeschaltstellung erfaßt und der elektronischen Schaltregeleinheit (10) bzw. dem Motorsteuergerät zugeführt wird, und daß aufgrund in dem Schaltprogramm gespeicherter Informationen unzulässige Schaltbetätigungen blockiert sind.

14. Vorrichtung nach einem der Ansprüche 1 bis 13, dadurch gekennzeichnet, daß die Schaltbetätigungseinrichtung (1), die Antriebseinheit (9), die elektronische Schaltregeleinheit (10) bzw. das Motorsteuergerät und die Bedieneinheit (11) als Nachrüstteile für ein Motorfahrzeug und insbesondere ein Motorrad ausgebildet sind.

15. Vorrichtung nach einem der Ansprüche 1 bis 14, dadurch gekennzeichnet, daß sie eine Kupplungsbetätigungseinrichtung aufweist, die von der Schaltregeleinheit (10) gesteuert wird.
